# EUROPEAN PATENT APPLICATION

(11) **EP 4 746 082 A1**
(43) Date of publication of application: **20.05.2026**
(21) Application number: 25215620.3
(22) Date of filing: 13.11.2025
(51) Int. Cl.: H01M 4/92, H01M 4/86, H01M 8/10, H01M 8/1016, H01B 1/08, H01M 12/06, H01M 4/90

(54) **AIR-ELECTRODE ACTIVE MATERIAL AND ELECTROCHEMICAL DEVICE HAVING THE SAME**

(30) Priority: 13.11.2024 KR 20240160809; 29.10.2025 KR 20250159156
(71) Applicant: Industry Academy Cooperation Foundation Of Sejong University, Seoul 05006 (KR)
(72) Inventor: PARK, Jun Young, Seongnam-si (KR); KIM, Min Ji, 07758 Seoul (KR); PARK, Kwang Ho, 14996 Siheung-si (KR); JO, Min Kyeong, 05229 Seoul (KR)
(74) Representative: Marks & Clerk LLP

(57) **Abstract**

Provided are an air electrode active material and an electrochemical device comprising the same. The air electrode active material has a composition represented by the following Chemical Formula 1: [Chemical Formula 1] LnBa₂Cu₃₋ₓMₓO_{7-δ}. In Chemical Formula 1, Ln is a lanthanide element, M is a transition metal with an oxidation number of 5 to 6, x is 0 to 0.3, and δ is 0 to 1.

## Description

### [Technical Field]

The present invention relates to an electrochemical device, and more particularly, to an electrochemical device comprising an air electrode.

### [Background Art]

An electrochemical device includes a fuel electrode, an air electrode, and an electrolyte layer interposed between the fuel electrode and the air electrode. Among such electrochemical devices, those that consume or generate air include fuel cells, metal-air batteries, and electrolysis cells. These electrochemical devices are equipped with an air electrode that consumes or generates air, and this air electrode may comprise noble metal catalysts such as platinum (Pt), iridium (Ir), or ruthenium (Ru). However, due to the high cost and limited durability of these noble metal catalysts, various alternative catalysts are being researched to replace them.

In reversible protonic ceramic cells (RPCCs), which can operate in both fuel cell mode and its reverse electrolysis cell mode, the air electrode serves as an electrode where both the oxygen reduction reaction (ORR) and the oxygen evolution reaction (OER) occur. Therefore, the air electrode must exhibit excellent electronic conductivity, high ionic conductivity for oxygen ions and protons, and sufficient porosity to ensure the smooth flow of oxidizing gases.

As an active material for such an air electrode, cobalt-based oxides containing cobalt at the B-site of the perovskite structure (ABO₃), specifically Lanthanum Strontium Cobalt Ferrite (LSCF), are used. However, these cobalt-based oxides possess a high thermal expansion coefficient (TEC). As the lattice undergoes repeated contraction and expansion according to changes in the spin state of Co, delamination may occur between the air electrode and the electrolyte, which can lead to insufficient long-term stability.

### [Disclosure]

### [Technical Problem]

The objective of the present invention is to provide an air electrode active material capable of maintaining phase stability while exhibiting excellent catalytic activity, and an electrochemical device comprising the same.

The technical objectives of the present invention are not limited to those mentioned above, and other technical objectives not mentioned herein will be clearly understood by those skilled in the art from the following description.

### [Technical Solution]

To achieve the above technical objectives, one aspect of the present invention provides an air electrode active material. The air electrode active material has a composition represented by the following Chemical Formula 1:

[Chemical Formula 1] LnBa₂Cu₃₋ₓMₓO_{7-δ}

In Chemical Formula 1, Ln is a lanthanide element, M is a transition metal with an oxidation number of 5 to 6, x is 0 to 0.3, and δ is 0 to 1.

Ln may be Pr, Ce, or La. In this case, δ may be 0.6 to 1. In one embodiment, Ln may be Pr. M may be Mo, Nb, W, Ta, or V. Specifically, M may be Mo. x may be 0.1 to 0.3.

The air electrode active material may have a triple-layer perovskite structure and may have a single phase of a tetragonal structure. The space group of the air electrode active material may be P/4mmm.

In O1s X-ray photoelectron spectroscopy (XPS) analysis, the air electrode active material may exhibit an O_{ads}/Oₗₐₜ ratio (the ratio of the oxygen adsorption (O_{ads}) peak to the lattice oxygen (Oₗₐₜ) peak) of 4 to 5.

To achieve the above technical objectives, another aspect of the present invention provides an electrochemical device. The electrochemical device includes a fuel electrode, an air electrode, and an electrolyte layer disposed therebetween, wherein the air electrode contains the air electrode active material described above.

The electrolyte layer may be a proton-conducting electrolyte layer. The air electrode may not include an additional proton ion conductor or electron conductor.

The electrochemical device may be a Protonic Ceramic Fuel Cell (PCFC), a Protonic Ceramic Electrolyzer Cell (PCEC), or a Reversible Protonic Ceramic Cell (RPCC).

### [Description of Drawings]

FIG. 1 is a schematic diagram illustrating the crystal structure of an air electrode active material according to an embodiment of the present invention.
FIG. 2 is a schematic diagram for explaining the proton conductivity of active materials according to embodiments of the present invention.
FIG. 3 is a cross-sectional view schematically illustrating an electrochemical device according to an embodiment of the present invention.
FIG. 4 shows a schematic diagram (a) of an electrolyte-supported half-cell obtained in Electrolyte-supported Half-cell Preparation Example 2 and a photograph (b) of the top surface thereof.
FIG. 5 shows a schematic diagram (a) of a full cell obtained in Fuel-electrode-supported Full-cell Preparation Example 2 and a photograph (b) of the top surface thereof.
FIG. 6 shows SEM (Scanning Electron Microscopy) images of perovskite active materials according to Active Material Preparation Examples 1, 2, 4, 5, and 6.
FIG. 7 is an XRD (X-ray Diffraction) graph of perovskite materials according to Active Material Preparation Example 1 and Active Material Comparative Example 1.
FIG. 8 is an XRD graph of perovskite materials according to Active Material Preparation Examples 1 to 6.
FIGS. 9a, 9b, 9c, 9d, and 9e are graphs showing Rietveld analysis results of active materials obtained in Active Material Comparative Example and Active Material Preparation Examples 1, 2, 3, and 4, respectively.
FIG. 10 is a table summarizing values obtained from the graphs of FIGS. 9a, 9b, 9c, and 9e and the Rietveld analysis results of the active material according to Active Material Preparation Example 5.
FIG. 11 is a schematic diagram showing YBa₂Cu₃O_{7-δ} having an orthorhombic structure (a) and YBa₂Cu₃O_{7-δ} having a tetragonal structure (b).
FIG. 12 is an XRD graph of perovskite active materials according to Active Material Preparation Examples 1, 2, 8, and 9.
FIG. 13 shows O1s XPS (X-ray Photoelectron Spectroscopy) analysis results of perovskite active materials according to Active Material Comparative Example (a), Active Material Preparation Example 1 (b), and Active Material Preparation Example 2 (c).
FIG. 14 is an XRD graph of perovskite active materials according to Active Material Preparation Examples 2 and 7.
FIG. 15 shows XRD graphs before and after leaving the active material according to Active Material Preparation Example 2 in a humidified atmosphere.
FIG. 16 shows STEM-EDX (Scanning Transmission Electron Microscopy-Energy Dispersive X-ray Spectroscopy) results after leaving the active material according to Active Material Preparation Example 2 in a humidified atmosphere.
FIG. 17 shows XRD graphs before and after leaving the active material according to Active Material Preparation Example 7 in a humidified atmosphere.
FIG. 18 shows XRD graphs before and after leaving the active material according to the Active Material Comparative Example in a humidified atmosphere.
FIG. 19 is an XRD graph before and after heat treatment after mixing the perovskite active material (PBCM) according to Active Material Preparation Example 2 with Ba₁Ce_{0.7}Zr_{0.1}Y_{0.1}Yb_{0.1}O_{3-δ} (BCZYYb7111) at a mass ratio of 1:1.
FIG. 20 is a graph showing area specific resistance (ASR) measurement results of half-cells according to Half-cell Preparation Examples 1 to 4.
FIG. 21 is a graph showing ASR measurement results of half-cells according to Half-cell Preparation Examples 1, 2, 8, and 9.
FIG. 22 is a graph showing ASR measurement results of the half-cell according to Half-cell Preparation Example 2 as a function of time exposed to a humidified atmosphere.
FIG. 23 shows Nyquist plots obtained by performing Electrochemical Impedance Spectroscopy (EIS) on the half-cell according to Half-cell Preparation Example 2 in dry and humidified atmospheres.
FIG. 24 shows graphs measuring performance when the fuel-electrode-supported reversible protonic ceramic cell according to Full-cell Preparation Example 2 is operated in fuel cell mode (a) and electrolysis cell mode (b).

### [Detailed Description of the Invention]

Hereinafter, preferred embodiments of the present invention will be described in more detail with reference to the accompanying drawings to explain the present invention more specifically. However, the present invention is not limited to the embodiments described herein and may be embodied in other forms.

### Air Electrode Active Material

Since oxygen evolution and/or oxygen reduction reactions can occur at an air electrode in an electrochemical device, the air electrode active material may also be referred to as an oxygen evolution and/or oxygen reduction active material.

An air electrode active material according to an embodiment of the present invention may have a composition represented by the following Chemical Formula 1:

[Chemical Formula 1] LnBa₂Cu₃₋ₓMₓO_{7-δ}

In Chemical Formula 1, Ln may be a lanthanide element, specifically, La, Ce, Pr, Nd, Sm, Eu, Gd, Tb, Dy, Ho, Er, Tm, Yb, or Lu. Ln may be an element having a larger ionic radius compared to Y (yttrium), in which case the air electrode active material of Chemical Formula 1 may exhibit a tetragonal structure. Additionally, δ may be 0 to 1.

In one example, Ln may be Pr, or Ce or La which have a larger ionic radius than Pr. In this case, the air electrode active material of Chemical Formula 1 may exhibit a single phase of a tetragonal structure. Furthermore, in this case, δ may be 0.6 to 1. Specifically, Ln may be Pr.

M may be a transition metal having an oxidation number of 5 to 6, and as an example, may include Mo, Nb, W, Ta, V, or a combination thereof. The x may be 0 to 0.3, specifically greater than 0 and less than 0.3, more specifically 0.05 to 0.25, and for example, 0.1 to 0.2 or 0.13 to 0.17.

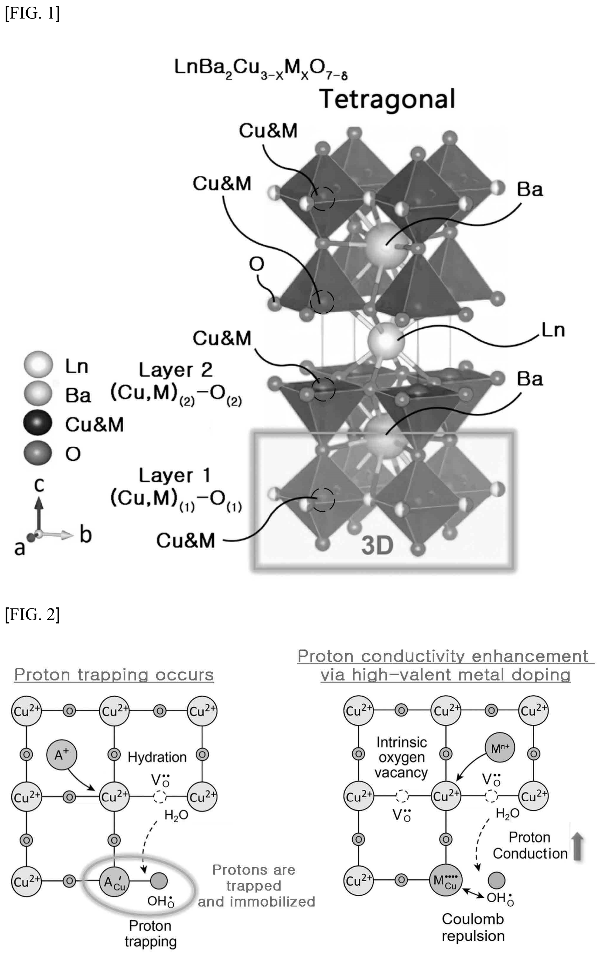

FIG. 1 is a schematic diagram illustrating the crystal structure of an air electrode active material according to an embodiment of the present invention.

Referring to FIG. 1, the air electrode active material according to an embodiment of the present invention, specifically the air electrode active material represented by Chemical Formula 1, may exhibit a layered perovskite structure consisting of (Cu, M)O-BaO-(Cu, M)O₂-Ln-(Cu, M)O₂-BaO-(Cu, M)O layers along the c-axis.

Furthermore, the air electrode active material according to an embodiment of the present invention may possess a triple-layered perovskite structure where the lengths of the a-axis and b-axis are identical, and the length of the c-axis is approximately three times that of the a-axis. The air electrode active material may possess a single-phase tetragonal structure with the P/4mmm space group. Compared to an orthorhombic structure, this single-phase tetragonal structure can exhibit greater stability against moisture and heat, with a coordination number of 6 for Cu and 12 for Ba.

This structure may contain numerous oxygen vacancies, which can act as catalytic active sites for oxygen adsorption and dissociation. Consequently, the air electrode active material according to this embodiment can exhibit superior catalytic activity, specifically in oxygen reduction or oxygen evolution characteristics. However, an excessive amount of oxygen vacancies can cause instability during cell operation, leading to reduced durability. In the embodiments of the present invention, the oxygen vacancy concentration is controlled within an appropriate range by doping the Cu sites with transition metals having an oxidation state of 5 to 6, such as Mo, Nb, W, Ta, or V. Specifically, in O1s X-ray photoelectron spectroscopy (XPS) analysis, the air electrode active material according to an embodiment of the present invention may exhibit an O_{ads}/Oₗₐₜ ratio, which is the ratio of the oxygen adsorption peak (O_{ads}) to the lattice oxygen peak (Oₗₐₜ), ranging from 3.5 to 6, and more specifically, from 4 to 5.

Furthermore, the active material according to the embodiments of the present invention can suppress the anisotropy of electron transport paths by exhibiting a single-phase tetragonal structure. Additionally, as the Cu sites are doped with transition metals having an oxidation state of 5 to 6, the material can maintain sufficient bulk electrical conductivity even under humidified conditions at temperatures of 500 °C or higher, specifically between 500 and 650 °C.

FIG. 2 is a schematic diagram for explaining the proton conductivity of the active material according to the embodiments of the present invention.

Referring to FIG. 2, when the Cu sites are doped with a transition metal (M) having an oxidation state of 5 to 6 (i.e., a donor), it is possible to suppress proton trapping, which typically occurs when doping with a metal (A⁺) having a lower oxidation state than Cu (i.e., an acceptor). Moreover, this promotes the hydration reaction, thereby enhancing proton conductivity.

These triple-layered perovskites can be obtained by mixing precursor powders, such as oxides, carbides, halides, carbonates, nitrates, or acetates of each metal component, in accordance with the stoichiometric ratio of the metal elements, followed by milling, forming into pellets, calcination (or sintering), and grinding. In addition, the triple-layered perovskite materials can be fabricated using chemical synthesis methods such as co-precipitation, hydrothermal synthesis, solution combustion, sol-gel, and chemical vapor deposition (CVD), or physical synthesis methods such as RF-magnetron sputtering, physical vapor deposition (PVD), and arc plasma deposition (APD).

### Electrochemical Device

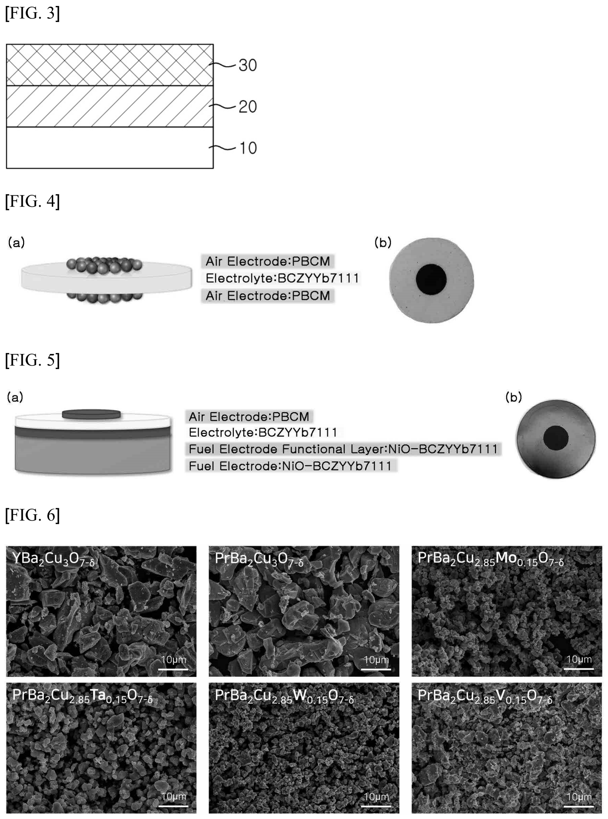

FIG. 3 is a cross-sectional view schematically illustrating an electrochemical device according to an embodiment of the present invention.

Such an electrochemical device may be a fuel cell, a metal-air battery, an electrolytic cell, a gas sensor, or a capacitor. In one example, the electrochemical device may be a protonic ceramic fuel cell (PCFC), a protonic ceramic electrolyzer cell (PCEC), or a reversible protonic ceramic cell (RPCC) having a proton-conducting electrolyte layer.

As shown in FIG. 3, the electrochemical device according to an embodiment of the present invention may include a fuel electrode 10, an electrolyte layer 20, and an air electrode 30 arranged in sequence.

The fuel electrode 10 may include a proton-conducting oxide and a catalytic metal. The proton-conducting oxide may be, for example, yttrium-doped barium zirconate (BZY), yttrium-doped barium cerate (BCY), yttrium-doped barium-zirconate-cerate (BZCY), or yttrium- and ytterbium-doped barium-cerate-zirconate (BCZYYb). In one example, it may be BCZYYb7111 (BaCe_{0.7}Zr_{0.1}Y_{0.1}Yb_{0.1}O_{3-δ}). The catalytic metal may be at least one selected from the group consisting of nickel (Ni), ruthenium (Ru), copper (Cu), palladium (Pd), rhodium (Rh), and platinum (Pt). Specifically, the fuel electrode 10 may be a mixture of BaCe_{0.7}Zr_{0.1}Y_{0.1}Yb_{0.1}O_{3-δ} (BCZYYb) and NiO. For instance, the fuel electrode 10 may be a thin film having a thickness of approximately 1 *µ*m to 50 *µ*m, and more specifically, 10 *µ*m to 30 *µ*m.

The electrolyte layer 20 may have a thickness of approximately 1 *µ*m to 50 *µ*m, specifically about 5 *µ*m to 10 *µ*m, and may be in the form of a dense membrane with substantially no pores. The electrolyte layer 20 may exhibit high proton conductivity by including a proton-conducting solid oxide. As an example, the proton-conducting solid oxide may be, but is not limited to, BZY, BCY, BZCY, or BCZYYb specifically, BaCe_{0.7}Zr_{0.1}Y_{0.1}Yb_{0.1}O_{3-δ}.

The air electrode 30 may include the air electrode active material represented by Chemical Formula 1. The air electrode 30 may not include an additional proton conductor or electron conductor. In other words, the air electrode 30 may consist solely of the active material particles represented by Chemical Formula 1 as a substance exhibiting effective performance, specifically oxygen evolution and/or oxygen reduction, proton conduction, or electron conduction. However, the air electrode 30 may contain impurities, that is substances exhibiting ineffective performance, other than the active material particles of Chemical Formula 1.

The electrochemical device may be a protonic ceramic fuel cell (PCFC) operated in a fuel cell mode, a protonic ceramic electrolyzer cell (PCEC) operated in an electrolytic cell mode, or a reversible protonic ceramic cell (RPCC) operated in both fuel cell and electrolytic cell modes. In the fuel electrode and the air electrode, the following reactions may occur for each mode.

### Fuel Cell Mode

Fuel Electrode : H₂ → 2H⁺ + 2e⁻ (Hydrogen Oxidation Reaction, HOR)

Air Electrode : 1/2O₂ + 2H⁺ + 2e⁻ → H₂O (Oxygen Reduction Reaction, ORR)

### Electrolytic Cell Mode

Fuel Electrode : 2H⁺ + 2e⁻ → H₂ (Hydrogen Evolution Reaction, HER)

Air Electrode : H₂O → 1/2O₂ + 2H⁺ + 2e⁻ (Oxygen Evolution Reaction, OER)

As described above, since the solid oxide fuel cell according to the present embodiment contains the triple-layered perovskite within the air electrode, it can perform both a fuel cell mode in which an oxygen reduction reaction (ORR) occurs and a water-splitting (or electrolysis) mode in which an oxygen evolution reaction (OER) occurs. In other words, unlike conventional electrochemical devices, the solid oxide fuel cell according to the present embodiment possesses the superior capability to implement two distinct functions within a single cell.

For example, during the daytime when power consumption is high, the fuel cell can be operated in the fuel cell mode to generate electricity; conversely, during the nighttime when power consumption is low, the fuel cell can be operated in the water-splitting mode to produce fuel.

Hereinafter, preferred examples are presented to facilitate the understanding of the present invention. However, the following examples are provided only for better understanding of the present invention, and the present invention is not limited by these examples.

### <Active Material Preparation Example 1 : PrBa₂Cu₃O_{7-δ}>

The material was synthesized via a solid-state reaction method. Pr₆O₁₁ (99.5%, Alfa Aesar), BaCO₃ (99.8%), and CuO (99.7%) were used as precursors. These precursors were weighed according to the stoichiometric ratio of Pr:Ba:Cu = 1:2:3, and then ball-milled for 24 hours using zirconia balls and ethanol as a solvent. The mixed slurry was dried overnight at 60 °C and then subjected to calcination at 900 °C for 10 hours in an air atmosphere to obtain the active material.

<Active Material Preparation Examples 2 to 7: PrBa₂Cu_{2.85}M_{0.15}O_{7-δ}> Active materials were obtained using the same method as in Active Material Preparation Example 1, except that M precursors (specifically, MoO₃ for M=Mo, Nb₂O₅ for M=Nb, WO₃ for M=W, Ta₂O₅ for M=Ta, V₂O₅ for M=V, and MnO₂ for M=Mn) were weighed along with Pr₆O₁₁ (99.5%, Alfa Aesar), BaCO₃ (99.8%), and CuO (99.7%) to satisfy the stoichiometric ratio of Pr:Ba:Cu:M = 1:2:2.85:0.15.

### <Active Material Preparation Example 8: PrBa₂Cu_{2.91}M_{0.09}O_{7-δ}>

An active material was obtained using the same method as in Active Material Preparation Example 1, except that Pr₆O₁₁ (99.5%, Alfa Aesar), BaCO₃ (99.8%), CuO (99.7%), and MoO₃ were weighed to satisfy the stoichiometric ratio of Pr:Ba:Cu:Mo = 1:2:2.91:0.09.

### <Active Material Preparation Example 9: PrBa₂Cu_{2.79}M_{0.21}O_{7-δ}>

An active material was obtained using the same method as in Active Material Preparation Example 1, except that Pr₆O₁₁ (99.5%, Alfa Aesar), BaCO₃ (99.8%), CuO (99.7%), and MoO₃ were weighed to satisfy the stoichiometric ratio of Pr:Ba:Cu:Mo = 1:2:2.79:0.21.

### <Active Material Comparative Example 1: YBa₂Cu₃O_{7-δ}>

An active material was obtained using the same method as in Active Material Preparation Example 1, except that Y₂O₃ (99.9%, Alfa Aesar), a Y-precursor, was used instead of Pr₆O₁₁, the Pr-precursor.

### <Electrolyte-Supported Half-Cell Preparation Examples 1 to 9>

An electrolyte support was fabricated by uniaxially press-molding 2g of Ba₁Ce_{0.7}Zr_{0.7}Y_{0.1}Yb_{0.1}O_{3-δ} (BCZYYb), a proton conductor, into a coin shape, followed by sintering at 1450 °C for 10 hours. Meanwhile, an air electrode active material ink was prepared by mixing the air electrode active material obtained from any one of Active Material Preparation Examples 1 to 9 with polyvinyl butyral (PVB) as a binder in ESL vehicle 441 (ElectroScience). The resulting air electrode ink was coated on both sides of the electrolyte support using a screen-printing method, followed by heat treatment at 850 °C for 2 hours to form the air electrodes.

FIG. 4 shows a schematic diagram (a) of an electrolyte-supported half-cell obtained in Electrolyte-supported Half-cell Preparation Example 2 and a photograph (b) of the top surface thereof.

### <Fuel Electrode-Supported Full Cell Preparation Examples 1 to 9>

A slurry was prepared by mixing 65 wt% NiO, 35 wt% BCZYYb (Ba₁Ce_{0.7}Zr_{0.1}Y_{0.1}Yb_{0.1}O_{3-δ}), PMMA (polymethyl methacrylate, pore former), DBP (dibutyl phthalate, plasticizer), PEG (polyethylene glycol, plasticizer), and PVB (polyvinyl butyral, binder) in a solvent mixture of ethanol and toluene. This slurry was cast onto a carrier film, dried, and then the carrier film was removed. The resulting product was processed into a circular shape with a diameter of 25 mm, followed by pre-sintering at 900 °C for 2 hours to obtain an fuel electrode support with a thickness of 40 to 50 *µ*m. On the obtained fuel electrode support, a slurry in which 65 wt% NiO and 35 wt% BCZYYb (Ba₁Ce_{0.7}Zr_{0.1}Y_{0.1}Yb_{0.1}O_{3-δ}) were dispersed in ethanol was coated and heat-treated at 400 °C for 2 hours to form a fuel electrode functional layer. Subsequently, a slurry of BCZYYb (Ba₁Ce_{0.7}Zr_{0.1}Y_{0.1}Yb_{0.1}O_{3-δ}) dispersed in ethanol was coated on the fuel electrode functional layer and sintered at 1450 °C for 4 hours to form an electrolyte layer. Meanwhile, an air electrode active material ink was prepared by mixing the air electrode active material obtained from any one of Active Material Preparation Examples 1 to 9 with PVB as a binder in a terpineol-based vehicle. The resulting air electrode active material ink was coated on the electrolyte layer using a screen-printing method and heat-treated at 850 °C for 2 hours. The final reaction area of the unit cell was 0.2827 cm².

FIG. 5 shows a schematic diagram (a) of a full cell obtained in Fuel-electrode-supported Full-cell Preparation Example 2 and a photograph (b) of the top surface thereof.

Table 1 below shows the compositions of the active materials prepared in the Active Material Preparation Examples and used in Half-Cell Preparation Examples and Full Cell Preparation Examples.

**[Table 1]**

| Active Material Preparation Example | Active Material Composition | Half-Cell Preparation Example | Full Cell Preparation Example |
|---|---|---|---|
| Active Material Preparation Example 1 | PrBa₂Cu₃O_{7-δ} | Half-Cell Preparation Example 1 | Full Cell Preparation Example 1 |
| Active Material Preparation Example 2 | PrBa₂Cu_{2.85}Mo_{0.15}O_{7-δ} | Half-Cell Preparation Example 2 | Full Cell Preparation Example 2 |
| Active Material Preparation Example 3 | PrBa₂Cu_{2.85}Nb_{0.15}O_{7-δ} | Half-Cell Preparation Example 3 | Full Cell Preparation Example 3 |
| Active Material Preparation Example 4 | PrBa₂Cu_{2.85}W_{0.15}O_{7-δ} | Half-Cell Preparation Example 4 | Full Cell Preparation Example 4 |
| Active Material Preparation Example 5 | PrBa₂Cu_{2.85}Ta_{0.15}O_{7-δ} | Half-Cell Preparation Example 5 | Full Cell Preparation Example 5 |
| Active Material Preparation Example 6 | PrBa₂Cu_{2.85}V_{0.15}O_{7-δ} | Half-Cell Preparation Example 6 | Full Cell Preparation Example 6 |
| Active Material Preparation Example 7 | PrBa₂Cu_{2.85}Mn_{0.15}O_{7-δ} | Half-Cell Preparation Example 7 | Full Cell Preparation Example 7 |
| Active Material Preparation Example 8 | PrBa₂Cu_{2.91}Mo_{0.09}O_{7-δ} | Half-Cell Preparation Example 8 | Full Cell Preparation Example 8 |
| Active Material Preparation Example 9 | PrBa₂Cu_{2.79}Mo_{0.21}O_{7-δ} | Half-Cell Preparation Example 9 | Full Cell Preparation Example 9 |
| Active Material Comparative Example | YBa₂Cu₃O_{7-δ} | Half-Cell Comparative Example | Full Cell Comparative Example |

### <Characterization>

The phases of the prepared active materials were identified via X-ray diffraction (XRD) at room temperature, and their particle morphologies were observed using a scanning electron microscope (SEM).

FIG. 6 shows SEM (Scanning Electron Microscopy) images of perovskite active materials according to Active Material Preparation Examples 1, 2, 4, 5, and 6.

Referring to FIG. 6, it can be confirmed that YBa₂Cu₃O_{7-δ} (Active Material Comparative Example 1) and PrBa₂Cu₃O_{7-δ} (Active Material Preparation Example 1) exhibit similar particle sizes. However, when the Cu sites are doped with Mo, Ta, W, or V (Active Material Preparation Examples 2, 5, 4, and 6), the particle size decreases.

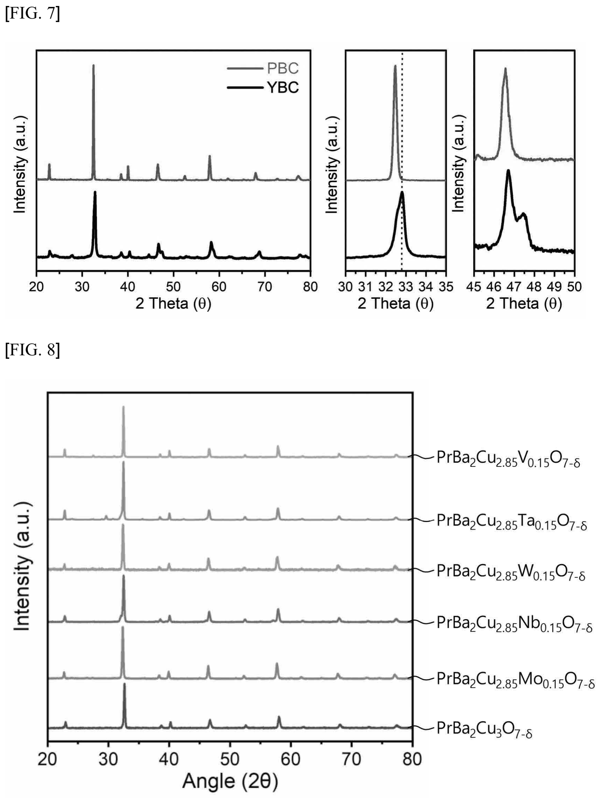

FIG. 7 is an XRD (X-ray Diffraction) graph of perovskite materials according to Active Material Preparation Example 1 and Active Material Comparative Example 1.

Referring to FIG. 7, it is observed that the main peak (between 2θ = 30° and 2θ = 35°) of PrBa₂Cu₃O_{7-δ} (Active Material Preparation Example 1) is shifted to the left compared to YBa₂Cu₃O_{7-δ} (Active Material Comparative Example 1). This indicates that structural change, such as lattice expansion, has occurred because the ionic radius of Pr (1.126 Å) is slightly larger than that of Y (1.019 Å). Furthermore, examining the peaks in the 2θ range of 45° to 50°, YBa₂Cu₃O_{7-δ} (Active Material Comparative Example 1) shows double peaks, indicating the coexistence of orthorhombic and tetragonal structures. In contrast, PrBa₂Cu₃O_{7-δ} (Active Material Preparation Example 1) exhibits a single peak, confirming a single-phase tetragonal structure.

FIG. 8 is an XRD graph of perovskite materials according to Active Material Preparation Examples 1 to 6.

Referring to FIG. 8, the perovskite active materials PrBa₂Cu_{2.85}M_{0.15}O_{7-δ} (M = Mo, Nb, W, Ta, or V) of Active Material Preparation Examples 2 to 6 all exhibit the same XRD patterns as PrBa₂Cu₃O_{7-δ} (Active Material Preparation Example 1). Thus, they are confirmed to possess a single-phase tetragonal structure, similar to Active Material Preparation Example 1.

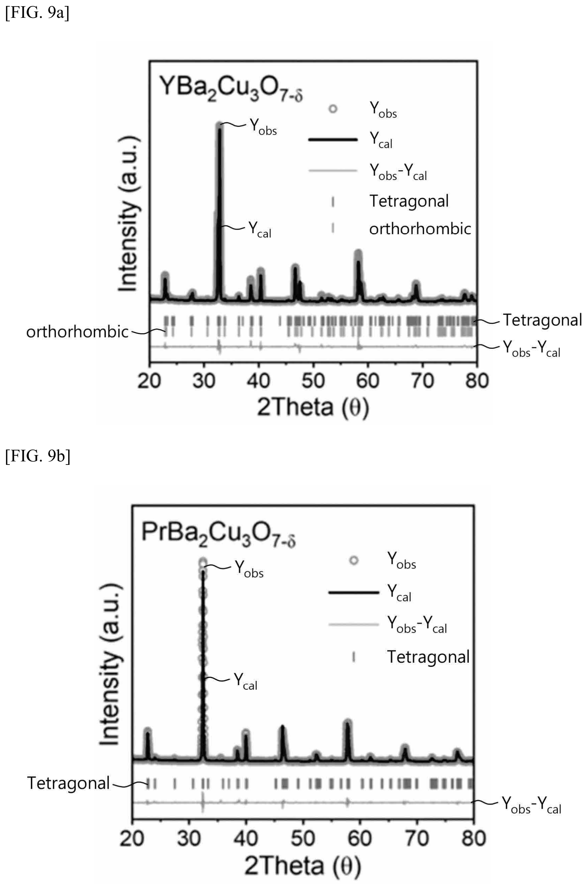

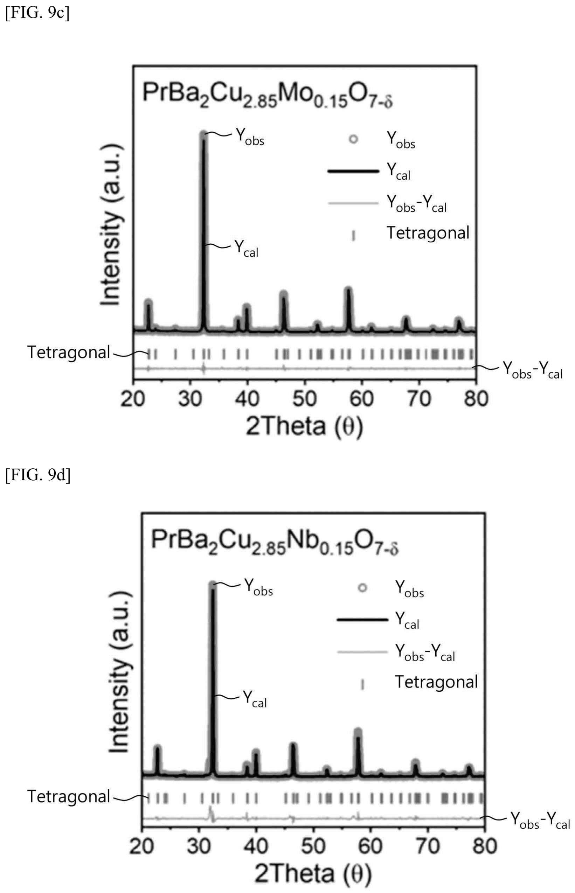

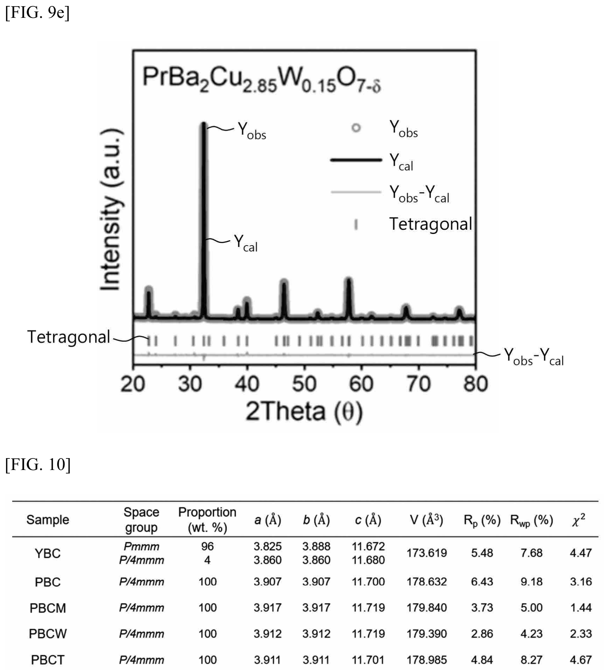

FIGS. 9a, 9b, 9c, 9d, and 9e are graphs showing Rietveld analysis results of active materials obtained in Active Material Comparative Example and Active Material Preparation Examples 1, 2, 3, and 4, respectively. FIG. 10 is a table summarizing values obtained from the graphs of FIGS. 9a, 9b, 9c, and 9e and the Rietveld analysis results of the active material according to Active Material Preparation Example 5.

Referring to FIGS. 9a, 9b, 9c, 9d, 9e, and 10, YBa₂Cu₃O_{7-δ} (YBC) according to Active Material Comparative Example 1 consists of a mixture of orthorhombic and tetragonal phases. On the other hand, the active materials PrBa₂Cu₃O_{7-δ} (PBC), PrBa₂Cu_{2.85}Mo_{0.15}O_{7-δ} (PBCM), PrBa₂Cu_{2.85}Nb_{0.15}O_{7-δ} (PBCN), PrBa₂Cu_{2.85}W_{0.15}O_{7-δ} (PBCW), and PrBa₂Cu_{2.85}Ta_{0.15}O_{7-δ} (PBCT) according to Active Material Preparation Examples 1, 2, 3, 4, and 5 all exhibit a single-phase tetragonal structure.

Furthermore, for the active materials according to the embodiments of the present invention, it can be seen that the lengths of the a-axis and b-axis of the unit cell are identical, and the length of the c-axis of the unit cell is approximately three times that of the a-axis. Therefore, it is confirmed that the active materials according to the embodiments of the present invention possess a triple-layered perovskite structure.

Referring to FIGS. 7, 9a, 9b, 9c, 9d, 9e, and 10 simultaneously, the emergence of a single-phase tetragonal structure without an orthorhombic phase in PrBa₂Cu₃O_{7-δ} (PBC) and the metal-doped variants at the Cu site, compared to YBa₂Cu₃O_{7-δ} (YBC), is presumed to be due to structural changes induced by the substitution of Y with Pr, which has a larger ionic radius.

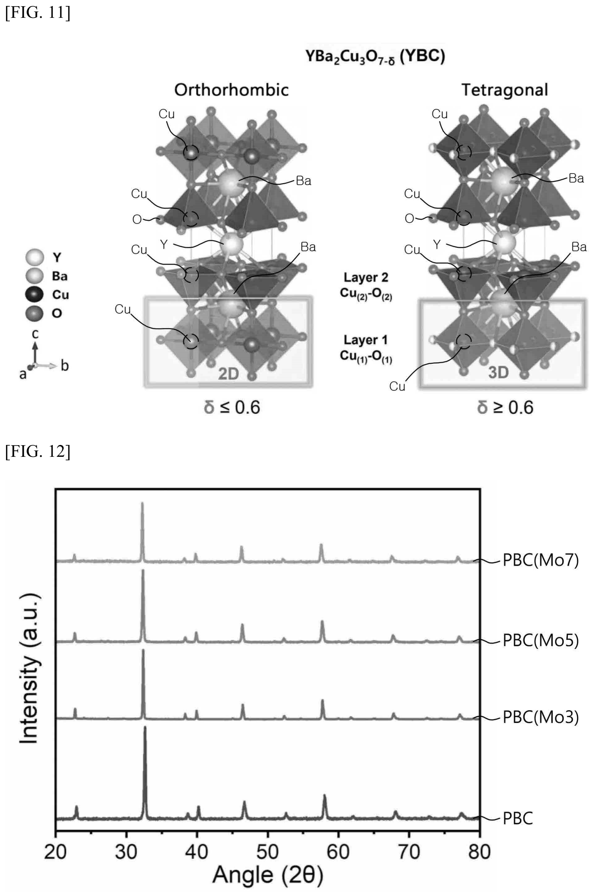

FIG. 11 is a schematic diagram showing YBa₂Cu₃O_{7-δ} having an orthorhombic structure (a) and YBa₂Cu₃O_{7-δ} having a tetragonal structure (b).

Referring to FIG. 11, in YBa₂Cu₃O_{7-δ} with an orthorhombic structure (a), δ has a value lower than 0.6, and the Cu(1)-O(1) layer forms a two-dimensional structure, which may be structurally unstable. In contrast, in YBC with a tetragonal structure, δ has a value greater than 0.6, and the Cu(1)-O(1) layer forms a three-dimensional structure bonded with oxygen in an octahedral configuration, thereby providing a more stable form. Furthermore, the tetragonal and orthorhombic phases may exhibit differences in coordination numbers. In the orthorhombic YBC, the coordination numbers of Cu and Ba are 4 and 10, respectively. In the tetragonal YBC, however, the coordination numbers of Cu and Ba are 6 and 12, respectively. Consequently, the tetragonal YBC can form a structure that is more stable against moisture and heat compared to the orthorhombic YBC.

Referring simultaneously to FIGS. 7, 9, 10, and 11, it can be seen that in the embodiments of the present invention, a single-phase tetragonal structure was formed by using Pr, which has a larger ionic radius than Y. As a result, the active materials according to the embodiments of the present invention can be structurally stabilized with a Cu coordination number of 6 and a Ba coordination number of 12.

FIG. 12 is an XRD graph of perovskite active materials according to Active Material Preparation Examples 1, 2, 8, and 9.

Referring to FIG. 12, the perovskite active materials doped with 3 mol% Mo (Active Material Preparation Example 8, PBC(Mo3)), 5 mol% Mo (Active Material Preparation Example 2, PBC(Mo5)), and 7 mol% Mo (Active Material Preparation Example 9, PBC(Mo7)) at the Cu site all exhibit the same XRD patterns as PrBa₂Cu₃O_{7-δ} from Active Material Preparation Example 1. This confirms that, like PrBa₂Cu₃O_{7-δ}, PBC(Mo3), PBC(Mo5), and (Mo7) all posses a single-phase tetragonal structure without the formation of impurities.

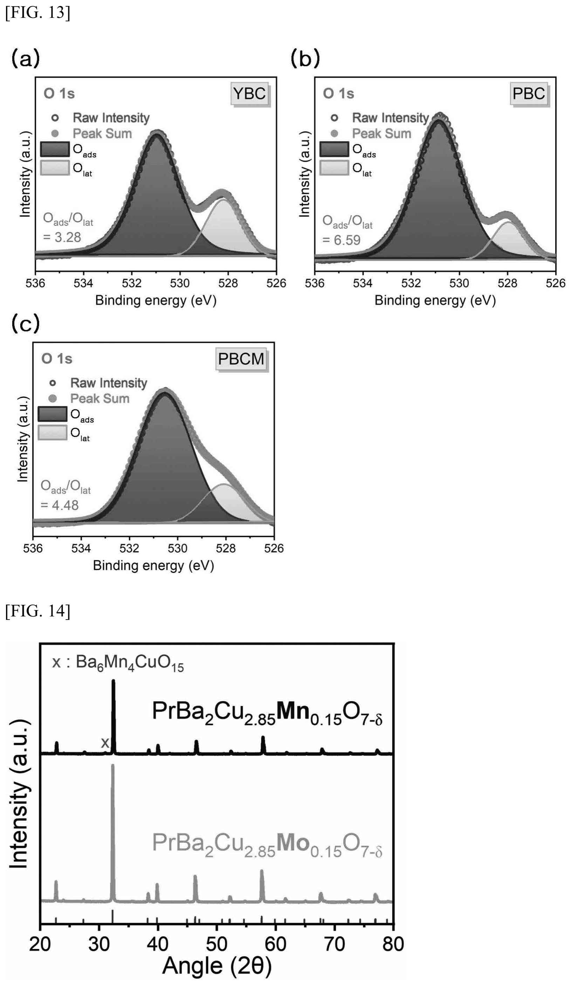

FIG. 13 shows O1s XPS (X-ray Photoelectron Spectroscopy) analysis results of perovskite active materials according to Active Material Comparative Example (a), Active Material Preparation Example 1 (b), and Active Material Preparation Example 2 (c).

Referring to FIG. 13, the bonding state of oxygen can be identified in the binding energy range of 536 to 526 eV. It can be categorized into an adsorbed oxygen (O_{ads}) peak and a lattice oxygen (Oₗₐₜ) peak, and the approximate degree of oxygen vacancies can be analyzed through the ratio of these two peaks (O_{ads}/Oₗₐₜ).

The O_{ads}/Oₗₐₜ ratios for YBa₂Cu₃O_{7-δ} according to Active Material Comparative Example 1 (a) and PrBa₂Cu₃O_{7-δ} according to Active Material Preparation Example 1 (b) are 3.28 and 6.59, respectively, indicating that PrBa₂Cu₃O_{7-δ} according to Active Material Preparation Example 1 (b) contains a higher concentration of oxygen vacancies. However, PrBa₂Cu_{2.85}Mo_{0.15}O_{7-δ} according to Active Material Preparation Example 2 (c) exhibits an O_{ads}/Oₗₐₜ ratio of 4.48, confirming an optimal oxygen vacancy concentration. As described above, it can be seen that PrBa₂Cu_{2.85}Mo_{0.15}O_{7-δ} according to Active Material Preparation Example 2 (c) possesses an intermediate oxygen vacancy concentration between those of YBa₂Cu₃O_{7-δ} (a) and PrBa₂Cu₃O_{7-δ} (b).

While a high oxygen vacancy concentration can enhance catalytic activity, it may also induce structural instability during cell operation. However, PrBa₂Cu_{2.85}Mo_{0.15}O_{7-δ} according to Active Material Preparation Example 2 (c) exhibits an optimal oxygen vacancy concentration, thereby achieving both excellent catalytic performance and superior durability.

FIG. 14 is an XRD graph of perovskite active materials according to Active Material Preparation Examples 2 and 7.

Referring to FIG. 14, it can be observed that a small amount of Ba₆Mn₄CuO₁₅ impurity was formed when the element doped at the Cu site was Mn (Active Material Preparation Example 7), compared to when the doping element was Mo (Active Material Preparation Example 2).

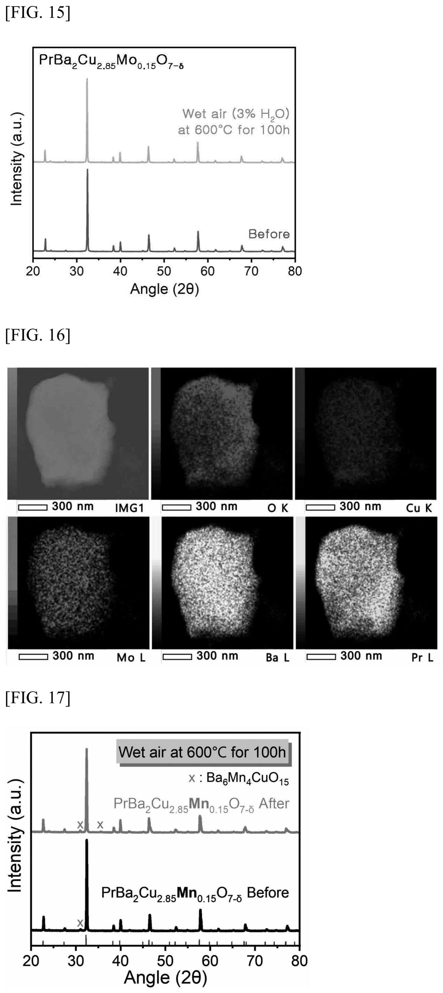

FIG. 15 shows XRD graphs before and after leaving the active material according to Active Material Preparation Example 2 in a humidified atmosphere. Exposure to a humidified atmosphere refers to maintaining the active material powder in an air atmosphere containing 3 vol% water vapor at 600 °C for 100 hours.

Referring to FIG. 15, it is confirmed that the active material according to Active Material Preparation Example 2 maintains a single-phase tetragonal structure both before and after exposure to the humidified atmosphere. Therefore, it can be inferred that the active material according to Active Material Preparation Example 2 will exhibit structural stability under operating environments when applied to the air electrode of a proton-conducting electrolyte cell.

In addition, the active material according to Active Material Preparation Example 2 maintained its structural stability even after being left for 100 hours in an air atmosphere containing 20 vol% water vapor at 600 °C.

FIG. 16 shows STEM-EDX (Scanning Transmission Electron Microscopy-Energy Dispersive X-ray Spectroscopy) results after leaving the active material according to Active Material Preparation Example 2 in a humidified atmosphere. Here, exposure to the humidified atmosphere refers to maintaining the material in an air atmosphere containing 20 vol% water vapor at 600 °C for 100 hours.

Referring to FIG. 16, it can be observed that all components are uniformly distributed in the active material according to Active Material Preparation Example 2, even after exposure to the harsh humidified atmosphere.

FIG. 17 shows XRD graphs before and after leaving the active material according to Active Material Preparation Example 7 in a humidified atmosphere. Exposure to a humidified atmosphere refers to maintaining the active material powder in an air atmosphere containing 3 vol% water vapor at 600 °C for 100 hours.

Referring simultaneously to FIGS. 14 and 17, The active material according to Active Material Preparation Example 7 contained a small amount of Ba₆Mn₄CuO₁₅ impurities even before exposure to the humidified atmosphere; after exposure, the Ba₆Mn₄CuO₁₅ impurity content increased by 6%, indicating low structural stability. This is presumed to be because the relatively low oxidation states of Mn (+2/+3/+4) induce excessive oxygen vacancies in the PBC-based material, thereby destabilizing the lattice.

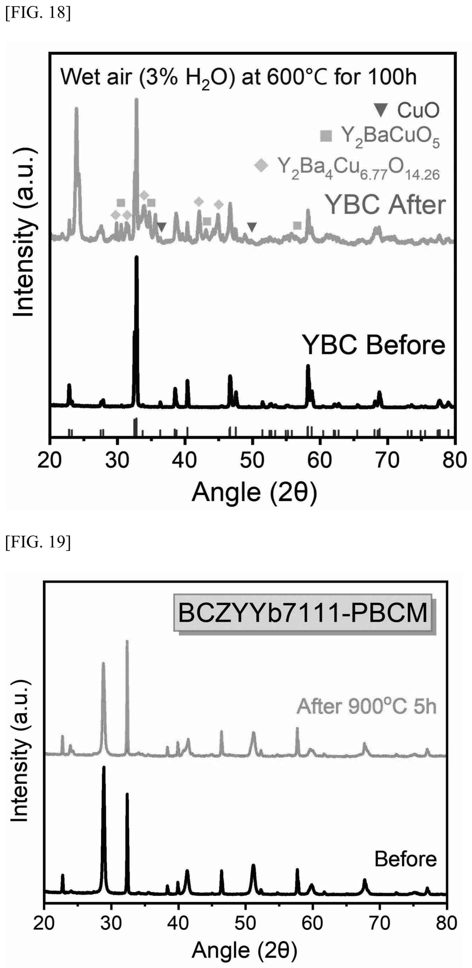

FIG. 18 shows XRD graphs before and after leaving the active material according to the Active Material Comparative Example in a humidified atmosphere. Exposure to a humidified atmosphere refers to maintaining the active material powder in an air atmosphere containing 3 vol% water vapor at 600 °C for 100 hours.

Referring to FIG. 18, it is observed that YBa₂Cu₃O_{7-δ} (Active Material Comparative Example 1) is unstable in a humidified atmosphere, leading to the formation of numerous impurities. Therefore, it can be concluded that using YBa₂Cu₃O_{7-δ} as an air electrode for a proton-conducting electrolyte cell is not desirable.

FIG. 19 is an XRD graph before and after heat treatment after mixing the perovskite active material (PBCM) according to Active Material Preparation Example 2 with Ba₁Ce_{0.7}Zr_{0.1}Y_{0.1}Yb_{0.1}O_{3-δ} (BCZYYb7111) at a mass ratio of 1:1. In this process, the heat treatment was performed at 900 °C for 5 hours, and the XRD patterns were measured at room temperature

Referring to FIG. 19, the mixture of BCZYYb7111 and PBCM exhibits the same XRD peaks before and after heat treatment, demonstrating that no secondary phases were formed. This confirms that PBCM is a suitable air electrode material that can be used in conjunction with the proton-conducting electrolyte, BCZYYb7111.

### <Electrochemical Impedance Spectroscopy Examples>

The prepared half-cells were placed in a quartz reactor of a VSP (Versatile multichannel Potentiostat) electrochemical analyzer (Biologic), and electrochemical impedance spectroscopy (EIS) was performed under conditions of a 400 sccm air flow rate and a temperature range of 500-700 °C.

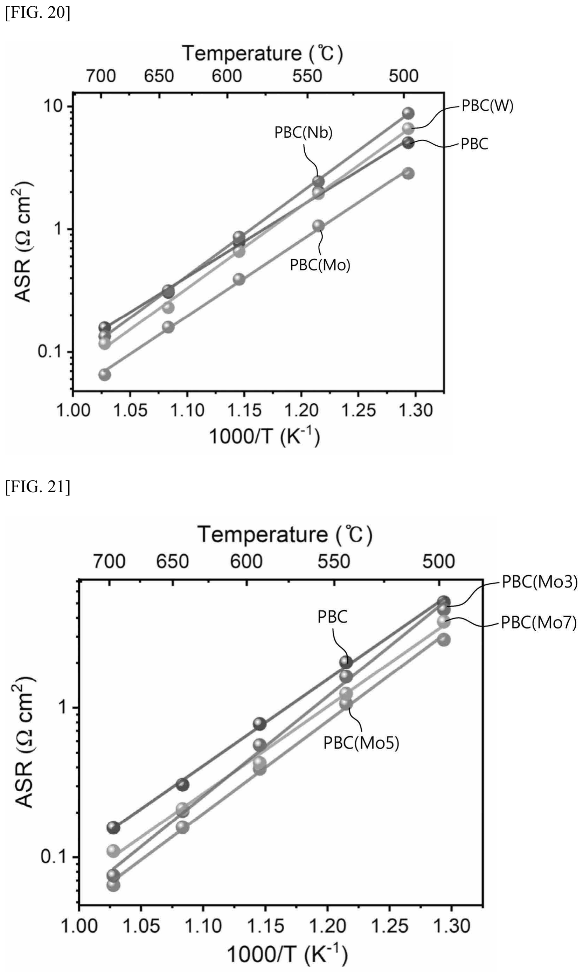

FIG. 20 is a graph showing area specific resistance (ASR) measurement results of half-cells according to Half-cell Preparation Examples 1 to 4.

Referring to FIG. 20, compared to the half-cell of Half-cell Preparation Example 1 (PBC), the half-cell of Half-cell Preparation Example 3 (PBC(Nb)) exhibited lower ASR values at high temperatures 700 °C or higher and the half-cell of Half-cell Preparation Example 4 (PBC(W)) exhibited lower ASR values at high temperatures 600 °C or higher. On the other hand, the half-cell of Half-cell Preparation Example 2 (PBC(Mo)) showed the lowest ASR values across the entire temperature range from 500 to 700 °C. These results are presumed to be due to an increase in ionic conductivity and the reduction of excessive oxygen vacancies within the material induced by Mo doping.

FIG. 21 is a graph showing ASR measurement results of half-cells according to Half-cell Preparation Examples 1, 2, 8, and 9.

Referring to FIG. 21, it can be seen that the perovskite active material PrBa₂Cu_{2.85}Mo_{0.15}O_{7-δ} (PBC(Mo5)) with 5 mol% Mo doping (Active Material Preparation Example 2) exhibited the lowest ASR values compared to PrBa₂Cu_{2.91}Mo_{0.09}O_{7-δ} (PBC(Mo3)) with 3 mol% Mo doping (Active Material Preparation Example 8) and PrBa₂Cu_{2.79}Mo_{0.21}O_{7-δ} (PBC(Mo7)) with 7 mol% Mo doping (Active Material Preparation Example 9).

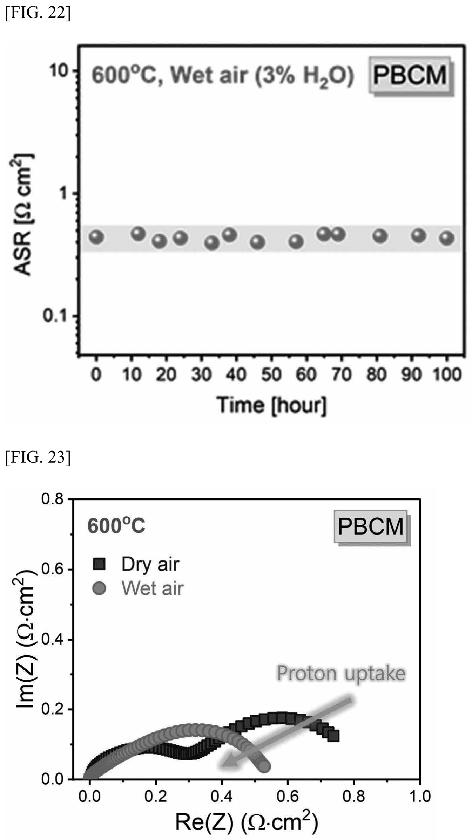

FIG. 22 is a graph showing ASR measurement results of the half-cell according to Half-cell Preparation Example 2 as a function of time exposed to a humidified atmosphere.

Referring to FIG. 22, it was confirmed that the half-cell according to Half-cell Preparation Example 2, featuring PrBa₂Cu_{2.85}Mo_{0.15}O_{7-δ} as the air electrode active material, maintained stability without significant degradation for 100 hours in an air atmosphere containing 3 vol% water vapor at 600 °C.

FIG. 23 shows Nyquist plots obtained by performing Electrochemical Impedance Spectroscopy (EIS) on the half-cell according to Half-cell Preparation Example 2 in dry and humidified atmospheres.

Referring to FIG. 23, the half-cell according to Half-cell Preparation Example 2, featuring PrBa₂Cu_{2.85}Mo_{0.15}O_{7-δ} as the air electrode active material, showed a decrease in resistance when the environment shifted from dry air to a humidified atmosphere containing 3 vol% water vapor at 600 °C. This reduction in resistance results from improved proton conductivity due to the hydration reaction with water. Consequently, it is confirmed that PrBa₂Cu_{2.85}Mo_{0.15}O_{7-δ} maintains high stability in humidified environments and is a promising air electrode material with excellent proton conductivity.

### <Full-Cell Characterization Examples>

The full cell was placed in a ceramic reactor and sealed using a ceramic bond from Aremco to prevent gas crossover between the gases injected into the air electrode and fuel electrode. After drying for 2 hours, the temperature was raised in an electric furnace. The reactor was placed in a high-temperature electric furnace, and its characteristics were measured at temperatures ranging from 500 to 700 °C.

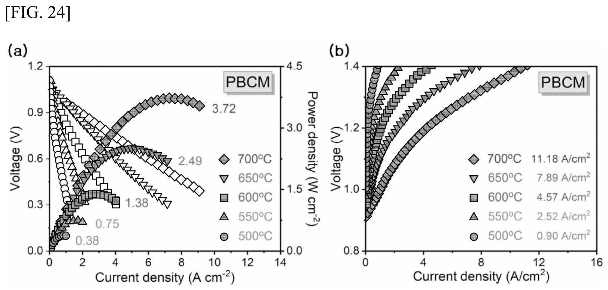

FIG. 24 shows graphs measuring performance when the fuel-electrode-supported reversible protonic ceramic cell according to Full-cell Preparation Example 2 is operated in fuel cell mode (a) and electrolysis cell mode (b).

FIG. 24(a) shows the I-V-P curves measured in fuel cell mode at 500-700 °C, where hydrogen gas containing 3 vol% water vapor was injected into the fuel electrode and dry air was injected into the air electrode. The measurements were conducted using a temperature-drop method.

Referring to FIG. 24(a), a high open-circuit voltage (OCV) of 1.03 to 1.10 V was observed at 500-700 °C, indicating that the electrolyte was densely formed without gas leakage. Furthermore, the cell exhibited excellent performance, with peak power densities of 0.38, 0.75, 1.38, 2.49, and 3.72 W/cm² at each respective temperature.

FIG. 24(b) shows the I-V curves measured in electrolysis cell mode at 500-700 °C, where hydrogen gas containing 3 vol% water vapor was injected into the fuel electrode and humidified air with an air-to-H₂O steam ratio of 80:20 (v:v) was injected into the air electrode.

Referring to FIG. 24(b), the current densities at 1.4 V were 0.90, 2.52, 4.57, 7.89, and 11.18 A/cm² during operation at 500, 550, 600, 650, and 700 °C, respectively, showing outstanding performance. Notably, such high performance was achieved even though the air electrode contained no cobalt. Accordingly, it is confirmed that PBCM according to an embodiment of the present invention is a highly promising candidate as an air electrode for reversible protonic ceramic cells in the intermediate-to-low temperature range.

While the present invention has been described in detail with reference to preferred embodiments, it is to be understood that the invention is not limited to these embodiments. Various modifications and changes can be made by those skilled in the art within the spirit and scope of the technical idea of the present invention.

## Claims

1. An air electrode active material having a composition represented by the following Chemical Formula 1:
[Chemical Formula 1] LnBa₂Cu₃₋ₓMₓO_{7-δ}
in Chemical Formula 1, Ln is a lanthanide element, M is a transition metal with an oxidation number of 5 to 6, x is 0 to 0.3, and δ is 0 to 1.

2. The air electrode active material of Claim 1, wherein Ln is Pr, Ce, or La.

3. The air electrode active material of Claim 2, wherein Ln is Pr.

4. The air electrode active material of Claim 2, δ is 0.6 to 1.

5. The air electrode active material of Claim 1, wherein M is Mo, Nb, W, Ta, or V.

6. The air electrode active material of Claim 5, wherein M is Mo.

7. The air electrode active material of Claim 1, wherein x is 0.1 to 0.3.

8. The air electrode active material of Claim 1, wherein the air electrode active material has a triple-layer perovskite structure and has a single phase of a tetragonal structure.

9. The air electrode active material of Claim 1, wherein the space group of the air electrode active material is P/4mmm.

10. The air electrode active material of Claim 1, wherein the air electrode active material exhibits an O_{ads}/Oₗₐₜ ratio of 4 to 5, which is a ratio of the oxygen adsorption (O_{ads}) peak to the lattice oxygen (Oₗₐₜ) peak, in O1s X-ray photoelectron spectroscopy (XPS) analysis,

11. Electrochemical device comprising:
a fuel electrode, an air electrode, and an electrolyte layer disposed therebetween,
wherein the air electrode contains the air electrode active material according to any one of Claims 1 to 10.

12. The electrochemical device of Claim 11, wherein the electrolyte layer is a proton-conducting electrolyte layer.

13. The electrochemical device of Claim 11, wherein the air electrode does not include an additional proton ion conductor or electron conductor.

14. The electrochemical device of Claim 11, wherein the electrochemical device is a Protonic Ceramic Fuel Cell (PCFC), a Protonic Ceramic Electrolyzer Cell (PCEC), or a Reversible Protonic Ceramic Cell (RPCC).
